# EUROPÄISCHE PATENTANMELDUNG

(11) **EP 4 292 676 A1**
(43) Veröffentlichungstag der Anmeldung: **20.12.2023**
(21) Anmeldenummer: 22178808.6
(22) Anmeldetag: 14.06.2022
(51) Int. Cl.: A62C 37/50, E04B 1/94, G01L 1/22, H02G 3/04, E06B 9/68, F16L 5/04

(54) **BAUELEMENT, SENSORSYSTEM UND VERFAHREN ZUR ÜBERWACHUNG EINER DURCHGANGSÖFFNUNG**

(71) Anmelder: Hilti Aktiengesellschaft, 9494 Schaan (LI)
(72) Erfinder: Zientek, Michal Wladyslaw, 6710 Nenzing (AT)
(74) Vertreter: Hilti Aktiengesellschaft Corporate Intellectual Property

(57) **Zusammenfassung**

Die Erfindung betrifft ein Bauelement (10), beispielsweise eine Wand, eine Decke oder ein Boden eines Gebäudes, mit einer Durchgangsöffnung (12), umfassend ein Sensorsystem (24) eingerichtet zur Überwachung der Durchgangsöffnung (12). Das Sensorsystem (24) weist wenigstens einen Sensor (22, 22a, 22b, 22c, 22d) zur Erfassung eines Messwertes (M1, M2, M3, M4) der Durchgangsöffnung (12) aufweist, wobei der Sensor (22, 22a, 22b, 22c, 22d) an einem Innenumfang (20) der Durchgangsöffnung (12) angeordnet ist. Des Weiteren betrifft die Erfindung ein Sensorsystem (24) sowie ein Verfahren (1000). Die Erfindung ermöglicht eine sichere Überwachung der Durchgangsöffnung (12), wobei dennoch Änderungen im Inneren der Durchgangsöffnung (12) weiterhin möglich bleiben.

## Beschreibung

Die Erfindung betrifft ein Bauelement, beispielsweise eine Wand, eine Decke oder einen Boden eines Gebäudes, mit einer Durchgangsöffnung. Das Bauelement soll gegen eine Ausbreitung von Gefahren wie Hitze oder Kälte, Rauch, Lärm oder dergleichen, durch die Durchgangsöffnung hindurch geschützt werden.

Durch die Durchgangsöffnung können Leitungen, beispielsweise Stromleitungen oder Wasserleitungen, durchgeführt sein.

Die übrige Durchgangsöffnung kann mit Füllelementen, beispielsweise Brandschutzziegeln, befüllt sein.

Aus sicherheitstechnischen Gründen müssen derart geschützte Durchgangsöffnungen regelmäßig überprüft werden.

Bislang erfolgt diese Überprüfung in der Regel durch manuelle, visuelle Kontrolle. Dies ist sehr aufwendig. Aufgrund zu seltener Überprüfungsintervalle können zudem längere Zeiträume entstehen, während der die ordnungsgemäße Funktion eines solchen Schutzes nicht sichergestellt werden kann.

Alternativ sind vereinzelt auch Sensorsysteme bekannt, die eine solche Überprüfung der Durchgangsöffnung automatisiert übernehmen. Derartige Systeme sind beispielsweise vor oder hinter der Durchgangsöffnung anzubringen. Müssen daher neue Leitungen durch die Durchgangsöffnung geführt werden oder sind bestehende Leitungen aus der Durchgangsöffnung zu entfernen, müssen diese Sensorsysteme daher zunächst entfernt werden. Dies kann je nach Befestigung der Sensorsysteme sehr aufwendig sein. Häufig ist es auch nicht möglich, das Sensorsystem zu entfernen, ohne zumindest einen Teil zu beschädigen.

Dadurch entstehen bei solchen nachträglichen Änderungen erhebliche Zusatzkosten.

Ähnliches gilt auch für die Überwachung anderer Durchgangsöffnungen, die beispielsweise mit Füllelementen zum Schutz vor Lärmausbreitung oder ähnlicher Gefahren dienen.

Aufgabe der vorliegenden Erfindung ist es daher, ein Bauelement, ein Sensorsystem sowie ein Verfahren anzubieten, die eine einfache Überprüfung einer Durchgangsöffnung ermöglichen, wobei besonders gewünscht ist, dass auch nachträgliche Änderungen an der Durchgangsöffnung einfach durchführbar sind.

Gelöst wird die Aufgabe durch **ein Bauelement mit einer Durchgangsöffnung,** umfassend ein Sensorsystem, wobei das Sensorsystem zur Überwachung der Durchgangsöffnung eingerichtet ist, wobei das Sensorsystem wenigstens einen Sensor zur Erfassung eines Messwertes der Durchgangsöffnung aufweist, wobei der Sensor an einem Innenumfang der Durchgangsöffnung angeordnet ist.

Das Bauelement kann beispielsweise eine Wand, eine Decke oder ein Boden eines Bauwerkes sein. Das Bauelement kann Hochbau und / oder Tiefbau betreffen.

Der Sensor kann sich somit im Inneren der Durchgangsöffnung befinden. Er kann insbesondere nicht außen auf dem Bauelement oder auf in der Durchgangsöffnung befindlichen Elementen sitzen. Am Innenumfang der Durchgangsöffnung sitzend behindert der Sensor auch nicht bei nachträglichen Änderungen an der Befüllung der Durchgangsöffnung. So kann ungehindert auf die Durchgangsöffnung zugegriffen werden. Änderungen im Bereich der Durchgangsöffnung werden durch das Sensorsystem nicht behindert.

Der Sensor kann eingerichtet sein, vom Innenumfang aus zumindest einen Bereich des Innenraums der Durchgangsöffnung direkt oder indirekt zu überwachen.

Werden Änderungen im Innenraum der Durchgangsöffnung vorgenommen, so führt dies zu Vibrationen, Änderungen in Kräften und Drücken, beispielsweise Spann-, Druck-, Biege-Kräften, oder ähnlichen physikalischen Effekten.

Somit kann eine Änderung im Innenraum durch den oder die Sensoren detektiert werden, indem der Sensor ein oder mehrere dieser physikalischen Effekte detektiert.

Somit können selbst nachträgliche Änderungen an der Befüllung der Durchgangsöffnung oder allgemein am Zustand der Durchgangsöffnung detektiert werden, obwohl die Sensoren lediglich an einem Rand der Durchgangsöffnung, insbesondere am Innenumfang der Durchgangsöffnung, angeordnet sind.

"Überwachung" kann bedeuten, dass wenigstens ein Messwert erfasst wird. Von "Überwachung" kann mitumfasst sein, dass Veränderungen des Messwertes identifiziert werden und / oder dass identifiziert wird, dass der Messwert einen zugehörigen Sollwertebereich verlässt. Auch kann "Überwachung" mitumfassen, dass bei einem solchen Ereignis, also beispielsweise einer Veränderung und / oder einem Verlassen des Sollwertebereichs, eine Aktion ausgelöst wird. Die Aktion kann beispielsweise eine Dokumentationsaktion und / oder ein Auslösen eines Alarmsignals umfassen.

Insbesondere kann unter "Überwachung" der Durchgangsöffnung verstanden werden, dass eine Veränderung an in der Durchgangsöffnung befindlichen Füllelementen detektiert wird. Insbesondere kann "Überwachung" umfassen, dass erkannt wird, wenn ein in der Durchgangsöffnung befindliches Füllelement hinzugefügt, entfernt oder verändert, beispielsweise verformt und / oder in seiner Position und / oder Lage verändert, wird. Solche Füllelemente können beispielsweise Brandschutzelemente sein.

Somit kann durch eine solche Überwachung sichergestellt werden, dass bei einer Durchgangsöffnung, beispielsweise eine Durchgangsöffnung in einer zwei Räume trennenden Wand, wobei die Durchgangsöffnung abgesehen von etwaigen durch sie hindurchführenden Rohren oder Leitungen mit Brandschutzelementen abgedichtet ist, ein ununterbrochener Brandschutz gewährleistet werden kann. Insbesondere kann durch die Überwachung sichergestellt werden, dass keines der Brandschutzelemente verrutscht, herausfällt oder dergleichen.

Allgemein kann das Sensorsystem eingerichtet sein, am Innenumfang der Durchgangsöffnung in wenigstens zwei gegenüberliegenden Bereichen der Durchgangsöffnung Messwerte zu erfassen.

Dazu ist denkbar, dass sich ein und derselbe Sensor über zwei sich gegenüberliegende Bereiche erstreckt.

Alternativ oder ergänzend kann das Sensorsystem auch mehrere Sensoren aufweisen. Jeweils wenigstens einer der Sensoren kann sich dann in jeweils einem der wenigstens zwei sich gegenüberliegenden Bereiche befinden. Besonders bevorzugt ist das Sensorsystem eingerichtet, wenigstens zwei Paare sich jeweils paarweise gegenüberliegender Bereiche, also insgesamt wenigstens vier Bereiche, zu überwachen.

Der Sensor kann sich auf wenigstens zwei gegenüberliegende Bereiche der Durchgangsöffnung erstrecken.

Dem liegt der Gedanke zugrunde, dass die genannten physikalischen Effekte häufig eine gerichtete Wirkung entfalten und somit gegensätzliche Wirkungen auf jeweils zwei der sich gegenüberliegenden Bereiche ausüben können. Somit können Veränderungen in der Durchgangsöffnung mit noch weiter verbesserter Empfindlichkeit detektiert werden. Zudem können zusätzliche Informationen über die in der Durchgangsöffnung stattfindenden Veränderungen gewonnen werden.

Die Durchgangsöffnung kann mit wenigstens einem Füllelement befüllt sein. Insbesondere kann wenigstens eine Querschnittsfläche der Durchgangsöffnung, gegebenenfalls mit Ausnahme von durch die Durchgangsöffnung verlaufenden Leitungsquerschnitte, mit Füllelementen befüllt sein.

Das Füllelement kann elastisch verformbar sein. Dann lässt sich die wenigstens eine Querschnittsfläche mit den Füllelementen einfach abdichten, indem die Füllelemente unter Druck in die Querschnittsfläche eingesetzt werden. Auch können elastische Füllelemente für eine besonders sichere Abdichtung der Durchgangsöffnung sorgen.

Denkbar ist, dass das Füllelement wenigstens eine Schutzfunktion aufweist. Das Füllelement kann beispielsweise brandhemmend, wärmeisolierend, schallisolierend und / oder fluiddichtend sein. Rauch, Hitze und / oder dergleichen können somit durch die Durchgangsöffnung nur noch in reduziertem Maße oder sogar überhaupt nicht mehr hindurch gelangen. Eine solche Schutzfunktion des Füllelements kann insbesondere dann als gegeben angesehen werden, wenn das Füllelement eine entsprechende Mindestanforderung einer einschlägigen Leistungsnorm, beispielsweise einer einschlägigen Brandschutznorm, erfüllt.

Dabei kann mit Hilfe des Sensorsystems besonders wirkungsvoll sichergestellt werden, dass eine mit solchen Füllelementen befüllte Durchgangsöffnung dauerhaft einen der Schutzfunktion der Füllelemente entsprechenden Schutz bietet. Insbesondere kann die Durchgangsöffnung hinsichtlich unerwünschter Änderungen, beispielsweise aufgrund von Fremdeinwirkungen aus der Durchgangsöffnung herausgefallene Füllelemente, nicht ordnungsgemäß angeordnete Füllelemente oder dergleichen, überwacht werden.

In den Rahmen der Erfindung fällt des Weiteren **ein Sensorsystem für ein Bauelement,** wobei das Bauelement wie vor- und / oder nachfolgend beschrieben ausgebildet ist, wobei das Sensorsystem umfasst: wenigstens einen an einem Innenumfang der Durchgangsöffnung des Bauelements anordenbaren Sensor, wobei der Sensor eingerichtet ist, einen Messwert der Durchgangsöffnung zu erfassen.

Änderungen in der Durchgangsöffnung können einfach detektiert werden, ohne dass der Sensor unmittelbar auf den sich ändernden Bereich innerhalb der Durchgangsöffnung sensorisch zugreifen braucht, wenn der Sensor ein Druck-, Spannungs-, Dehnungs- und / oder Kraftsensor ist.

Die entsprechenden Kräfte beziehungsweise Drücke können sich von einem Füllelement zu einem anderen Füllelement fortpflanzen. Somit können Änderungen in den entsprechenden physikalischen Effekten auch vom Innenumfang aus erfasst werden, auch wenn Änderungen im Innenraum der Durchgangsöffnung und entfernt vom Sensor, insbesondere in einem nicht unmittelbar an den Sensor angrenzenden Raum, stattfinden.

Der Sensor kann eine längliche Form aufweisen. Beispielsweise kann der Sensor streifenförmig sein.

Denkbar ist insbesondere, dass der Sensor einen Dehnungsmessstreifen und / oder ein Drucksensitives Material aufweist.

Der Sensor kann eine Schichtstruktur umfassen. Eine Schicht kann eine Schutzschicht sein. Die Schutzschicht kann eingerichtet sein, beispielsweise gegen mechanische Beschädigungen wie Kratzspuren oder dergleichen zu schützen. Eine Schicht kann eine Sensorschicht sein. Die Sensorschicht eingerichtet sein, den zur Detektion vorgesehenen physikalischen Effekt zu erfassen. Die Sensorschicht kann insbesondere Druck-, Zug- und / oder biegeempfindlich sein.

Der Sensor kann am Innenumfang der Durchgangsöffnung besonders einfach angebracht werden, wenn er zumindest eine Haftschicht und / oder eine reibungssteigernde Schicht aufweist. Auch kann die Durchgangsöffnung mit Füllelementen und / oder Leitungen befüllt werden, ohne dass der Sensor festgehalten werden muss. Die Haftschicht und / oder die reibungssteigernde Schicht können auf Basis von Adhäsion wirken. Die Haftschicht und / oder die reibungssteigernde Schicht können aus einem gummiartigen Material und / oder aus einem silikonhaltigen Material ausgebildet sein oder zumindest ein solches Material umfassen.

Der Sensor kann wenigstens eine Glasfaser aufweisen. Günstig bei Glasfasern ist, dass sie auch ermöglichen, auf den Sensor einwirkende Kräfte oder Drücke an einer Vielzahl von Stellen gleichzeitig zu erfassen. Das kann die Auswertung von Signalen des Sensors wesentlich erleichtern. Die Verwendung von Glasfasern kann auch entlang des Verlaufs der Glasfaser eine ortsaufgelöste Messung des jeweiligen physikalischen Effekts ermöglichen.

Das Sensorsystem kann wenigstens zwei, vorzugsweise wenigstens vier, Sensoren umfassen. Umfasst es beispielsweise vier Sensoren, können diese auf insgesamt vier, sich jeweils paarweise gegenüberliegenden Seiten der Durchgangsöffnung angeordnet werden. Somit können beispielsweise Scherkräfte jeweils in der Richtung der sich paarweise gegenüber liegenden Sensoren detektiert werden.

Auch ist denkbar, dass wenigstens zwei, vorzugsweise alle, Sensoren in Reihe geschaltet sind. Somit lässt sich die Menge an erforderlichen Leitungen von und / oder zu den Sensoren erheblich reduzieren. Kabelgewirr lässt sich vermeiden. Die Montage des Sensorsystems kann somit erheblich vereinfacht und beschleunigt werden.

Bei eigenen Untersuchungen hat sich gezeigt, dass die Messergebnisse der Sensoren stark temperaturabhängig sein können. Um Fehlalarme aufgrund einer solchen Temperaturabhängigkeit zu vermeiden und insbesondere die Temperaturabhängigkeit von Messergebnissen der Sensoren zu reduzieren, kann vorgesehen sein, mehrere Sensoren, insbesondere wenigstens vier Sensoren, in einer Wheatstone-Brücke anzuordnen.

Zur Versorgung kann das Sensorsystem eine Energiequelle umfassen. Die Energiequelle kann beispielsweise einen wiederaufladbaren Akkumulator umfassen. Denkbar ist insbesondere, dass die Energiequelle kabellos wiederaufladbar, beispielsweise induktiv aufladbar, ist.

Weiter kann das Sensorsystem eine Steuerung aufweisen. Die Steuerung kann einen Microcontroller umfassen. Der Mikrocontroller kann eingerichtet sein, mithilfe des Sensors des Sensorsystems die Durchgangsöffnung zu überwachen.

Die Steuerung und / oder die Energiequelle können in ein Gehäuse eingebaut sein. So können sie vor Umwelteinflüssen geschützt sein. Das Sensorsystem kann dadurch eine besonders lange Lebensdauer aufweisen.

Bei besonders vorteilhaften Ausführungsformen kann das Sensorsystem, insbesondere die Steuerung, ein Kommunikationsmodul aufweisen. Das Kommunikationsmodul kann ein drahtloses Kommunikationsmodul sein und / oder aufweisen. Denkbar ist insbesondere, dass das Kommunikationsmodul einem Funkstandard folgt, der besonders geeignet ist, aus einem Bauelement heraus, beispielsweise aus dem Inneren einer Stahlbetonwand heraus, zu kommunizieren. Vorzugsweise ist der vom Kommunikationsmodul verwendete Funkstandard zudem auf einen besonders energiesparenden Betrieb eingerichtet.

Dann ist es möglich, dass das Sensorsystem erfasste Messwerte und / oder detektierte Änderungen in und / oder an der Durchgangsöffnung an ein entferntes Rechnersystem überträgt. Das entfernte Rechnersystem kann ein Cloud-basiertes Rechnersystem sein. Denkbar ist insbesondere, dass das Cloud-basierte Rechnersystem und / oder ein anderes, vom Cloud-basierten Rechnersystem separates Rechnersystem eingerichtet ist, einen Zustand des Sensorsystems und / oder einer dem Sensorsystem zugeordneten Durchgangsöffnung abzufragen. Ein Zustand des Sensorsystems kann beispielsweise einem Ladezustand des Energiespeichers entsprechen. Ein Zustand der Durchgangsöffnung kann beispielsweise einer ordnungsgemäßen beziehungsweise nicht ordnungsgemäßen Anordnung der Füllelemente in der Durchgangsöffnung entsprechen.

Beispielsweise ist denkbar, dass ein Benutzer des anderen Rechnersystems aus einer Distanz über das Cloud-basierte Rechnersystem den Zustand abruft. Der Benutzer kann somit rasch und mühelos erkennen, ob beispielsweise die Durchgangsöffnung weiterhin ordnungsgemäß befüllt ist oder ob die Durchgangsöffnung beispielsweise unzulässige Lücken aufgrund einer nicht ordnungsgemäßen Befüllung mit Füllelementen aufweist.

In den Rahmen der Erfindung fällt auch ein **Füllelement mit einem Sensorsystem** gemäß der vorangehend und / oder nachfolgend beschriebenen Art.

Wenigstens ein Sensor, des Sensorsystems kann an einem Umfang des Füllelements angeordnet sein. Vorzugsweise können alle Sensoren an dem Umfang des Füllelements angeordnet sein.

Wird das Füllelement in die Durchgangsöffnung gebracht, kann somit wenigstens ein Sensor des Sensorsystem am Innenumfang der Durchgangsöffnung angeordnet sein.

Dazu kann das Füllelement Abmessungen entsprechend oder zumindest im Wesentlichen entsprechend den Innenabmessungen der Durchgangsöffnung, an der das Füllelement angeordnet werden soll, aufweisen. Dabei kann unter "im Wesentlichen entsprechend" beispielsweise bei einem kompressiblen Füllelement verstanden werden, dass es zwar in einer Dimension größer als die Durchgangsöffnung sein kann, aber zumindest unter Pressung in die Durchgangsöffnung eingepasst werden kann.

Der bzw. die Sensoren kann bzw. können außenseitig am Umfang des Füllelements angeordnet sein. Denkbar ist alternativ oder ergänzend, dass der bzw. die Sensoren innenseitig am Umfang des Füllelements angeordnet ist bzw. sind.

Somit lässt sich eine Durchgangsöffnung auf einfache Weise auch nachträglich mit einem Sensorsystem ausstatten, wobei zudem die Durchgangsöffnung mit einem Füllelement befüllt werden kann.

Das Füllelement kann als Polyeder, beispielsweise als Quader ausgebildet sein. Es kann flächendicht stapelbar sein.

Besonders bevorzugt kann das Füllelement ein Brandschutzziegel sein und / oder einen solchen umfassen. Die Durchgangsöffnung kann somit Brand-geschützt oder zumindest brandhemmend abgedichtet, sein.

Somit lässt sich ein Bauelement der vorangehend und / oder nachfolgend beschriebenen Art aus einem Bauelement mit einer Durchgangsöffnung nachträglich erzeugen, in dem das Füllelement mitsamt dem Sensorsystem in die Durchgangsöffnung eingepasst wird.

Je nach Art und / oder Größe des Füllelements ist es denkbar, zur vollständigen Befüllung der Durchgangsöffnung ein oder mehrere derartiger Füllelemente in die Durchgangsöffnung einzusetzen.

Dabei kann vorgesehen sein, dass wenigstens zwei der Füllelemente mit einer gemeinsamen Steuerung und / oder einer gemeinsamen Energiequelle verbunden sind. Dazu kann das Füllelement einen lösbaren Kabelverbinder, beispielsweise einen Steckkontakt, aufweisen. In den lösbaren Kabelverbinder kann ein Versorgungskabel der Energiequelle einsteckbar sein.

Denkbar ist alternativ oder ergänzend, dass die Steuerung und / oder die Energiequelle im Inneren des Füllelements angeordnet ist oder sind, sodass sich eine besonders kompakte Gestalt und damit eine vereinfachte Installation ergibt.

Weiter fällt in den Rahmen der Erfindung **ein Verfahren zur Überwachung eines Bauelements,** wobei das Bauelement einem Bauelement entspricht, wie es vorangehend und / oder nachfolgend beschrieben ist. Verfahrensgemäß wird ein Messwert der Durchgangsöffnung des Bauelements durch einen an einem Innenumfang der Durchgangsöffnung befindlichen Sensor gemessen.

Zwei Messwerte können an wenigstens zwei sich gegenüberliegenden Bereichen des Innenumfangs der Durchgangsöffnung gemessen werden.

Denkbar ist insbesondere, dass ein Differenzsignal aus Messwerten von sich jeweils paarweise gegenüber liegenden Sensoren gebildet wird. Somit lassen sich weitere Details zu Änderungen in einer Durchgangsöffnung ermitteln. Beispielsweise kann eine Richtung einer auf Füllelemente der Durchgangsöffnung wirkende Kraft ermittelt werden. So können auch weitere Details zur Art der Änderung, beispielsweise ob neues Füllelement hinzugefügt, ein bestehendes Füllelement entfernt und / oder ein Füllelement verschoben wurde, ermittelt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen

Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: ein Bauelement mit einer Durchgangsöffnung und einem Sensorsystem;
- Fig. 2: das Bauelement gemäß Fig. 1, das über ein Cloud-basiertes Rechnersystem mit einem Benutzer-Rechnersystem verbunden ist;
- Fig. 3: ein Flussdiagramm eines Verfahrens zur Überwachung einer Durchgangsöffnung.
- Fig. 4: ein Füllelement;
- Fig. 5: ein Bauelement mit dem Füllelement gemäß Fig. 4; und
- Fig. 6: ein Schaltbild mit vier in einer Wheatstone-Brücke verschalteten Sensoren.

In der nachfolgenden Beschreibung der Figuren werden zur Erleichterung des Verständnisses der Erfindung für gleiche oder sich funktional entsprechende Elemente jeweils die gleichen Bezugszeichen verwendet.

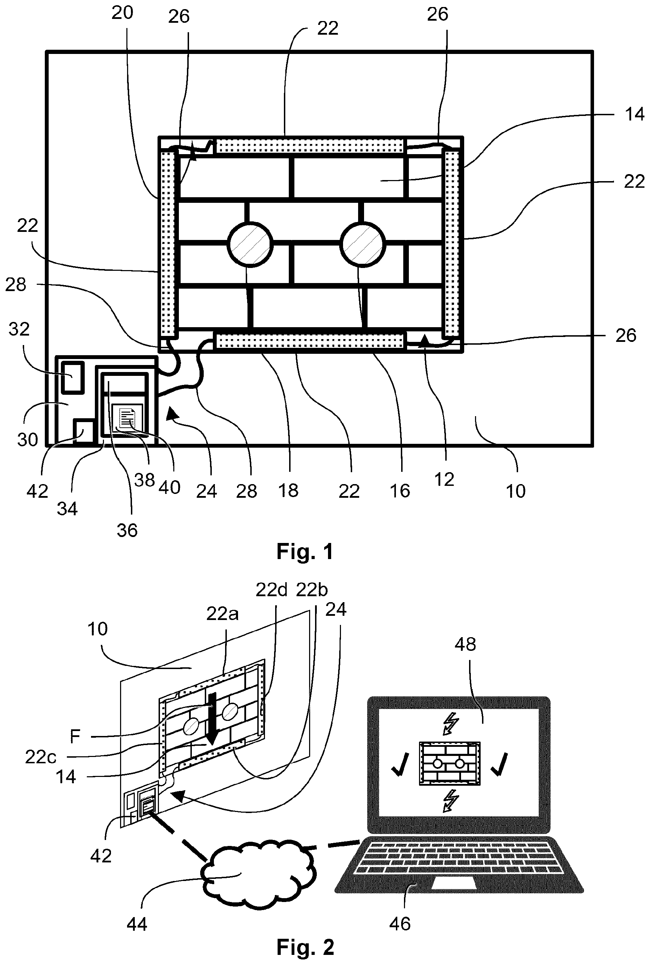

**Fig. 1** zeigt ein Bauelement **10**, das eine Durchgangsöffnung **12** aufweist, in einer schematischen Ansicht von vorne.

Die Durchgangsöffnung 12 ist mit Füllelementen **14** befüllt. Aus Gründen der Übersichtlichkeit ist in Fig. 1 lediglich eines der Füllelemente beispielhaft mit einem Bezugszeichen versehen.

Zwischen einzelnen der Füllelemente 14, also den Brandschutzziegeln, verlaufen Leitungen **16, 18**.

Die Füllelemente 14 sind Brandschutzziegel. Sie sind elastisch verformbar. Die Füllelemente 14 dichten den Innenraum der Durchgangsöffnung 12 ab. Somit ist die Durchgangsöffnung 12 brandhemmend ausgebildet.

An einem Innenumfang **20** der Durchgangsöffnung 12 befinden sich vier Sensoren **22** eines Sensorsystems **24**. Die vier Sensoren 22 sind jeweils paarweise an sich paarweise gegenüber liegenden Bereichen des Innenumfangs 20 angeordnet. Somit liegen sich jeweils zwei der vier Sensoren 22 gegenüber.

Die Sensoren 22 sind über elektrische Verbindungsleitungen **26** miteinander verschaltet. Die Sensoren 22 sind elektrisch in Reihe geschaltet. Ein Anfang dieser Reihe sowie ein Ende dieser Reihe ist mit Verbindungskabeln **28** mit einer Steuerung **30** des Sensorsystems 24 verbunden.

Die Sensoren 22 sind Drucksensoren. Sie sind insbesondere eingerichtet, quer zu ihrer Länge auf sie einwirkende Druckkräfte zu messen. Sie können dazu wenigstens eine Glasfaser aufweisen. Alternativ oder ergänzend können sie auch wenigstens einen Dehnungsmessstreifen aufweisen.

Die Steuerung 30 weist eine Energiequelle **32** auf. Die Energiequelle 32 ist eingerichtet, das Sensorsystem 24, insbesondere die Sensoren 22 sowie die Steuerung 28 mit elektrischer Energie zu versorgen. Die Energiequelle 32 umfasst einen wiederaufladbaren Akkumulator. Beispielsweise kann es sich um einen Lithium-basierten Akkumulator handeln.

Weiter weist die Steuerung 30 einen Microcontroller **34** auf. Der Mikrocontroller 34 umfasst einen Prozessor **36**, einen Speicher **38** und Programmcode **40**. Der Programmcode 40 ist in dem Speicher 38 abrufbar abgelegt und auf dem Prozessor 36 ausführbar.

Der Programmcode 40 in Verbindung mit dem übrigen Mikrocontroller 34 ist eingerichtet, von den Sensoren 22 erhaltene Messwerte auszuwerten. Insbesondere ist er eingerichtet, aus Änderungen von Messwerten der Sensoren 22 Änderungen innerhalb der Durchgangsöffnung 12 zu detektieren.

Dazu ist der Programmcode 40 in Verbindung mit dem Prozessor 36 und dem Speicher 38 eingerichtet, aus den Messwerten der vier Sensoren 22 jeweils paarweise Differenzsignale von jeweils zwei Paaren sich gegenüber liegender Sensoren 22 zu bilden.

Die Steuerung 30 weist weiter ein Kommunikationsmodul **42** auf. Das Kommunikationsmodul 42 umfasst ein Funkmodul zur drahtlosen Kommunikation mit einem externen Rechnersystem.

**Fig. 2** zeigt in einer schematischen, perspektivischen Darstellung das Bauelement 10 aus Fig. 1 sowie ein Cloud-basiertes Rechnersystem **44** sowie ein Benutzer-Rechnersystem **46** eines Benutzers des Bauelements 10 und dessen Sensorsystem 24.

In der schematischen Darstellung gemäß Fig. 2 ist zu erkennen, dass das Kommunikationsmodul 42 eingerichtet ist, Daten des Sensorsystems 24 an das Cloud-basierte Rechnersystem 44 zu transferieren.

Vom Cloud-basierten Rechnersystem 44 können Daten ganz oder teilweise vom Benutzer-Rechnersystem 46 abgerufen, weiter ausgewertet und / oder dem Benutzer zur Verfügung gestellt werden.

Beispielhaft ist in Fig. 2 mit einem von oben nach unten weisenden schwarzen Pfeil schematisch dargestellt, dass auf die Füllelemente 14 in der Durchgangsöffnung 12 eine von oben nach unten gerichtete Druckkraft **F** wirkt.

Durch die Druckkraft F wird somit ein oberer Sensor **22a** entlastet, ein unten angeordneter Sensor **22b** dagegen zusätzlich belastet. Zwischen diesen beiden Sensoren 22a, 22b kann somit eine Druckdifferenz registriert werden.

Zwei seitlich angeordnete Sensoren **22c, 22d** bleiben jedoch zumindest weitgehend von der Druckkraft F unbeeinflusst. Zwischen diesen Sensoren 22c, 22d wird somit keine Druckdifferenz festgestellt.

Aufgrund der feststellbaren Druckdifferenz gibt eine Anzeige **48** des Benutzer-Rechnersystems 46 ein negatives Signal in Bezug auf eine vertikale Richtung und ein positives Signal in Bezug auf eine horizontale Richtung aus.

Denkbar ist auch, dass anstelle oder ergänzend zu einem negativen Signal ein Wartungsprozess ausgelöst wird. Der Wartungsprozess kann eine Überprüfung und / oder eine Instandsetzung des Bauelements 10 und insbesondere der Durchgangsöffnung 12 umfassen.

Denkbar ist weiter, dass das Cloud-basierte Rechnersystem 44 und / oder das Benutzer-Rechnersystem 46 wenigstens einen Dokumentationsspeicher umfassen. Dann können positive und / oder negative Signale sowie gegebenenfalls noch weitere Daten, insbesondere das Bauelement 10 und / oder die Durchgangsöffnung 12 betreffende Daten, im Dokumentationsspeicher abgelegt werden.

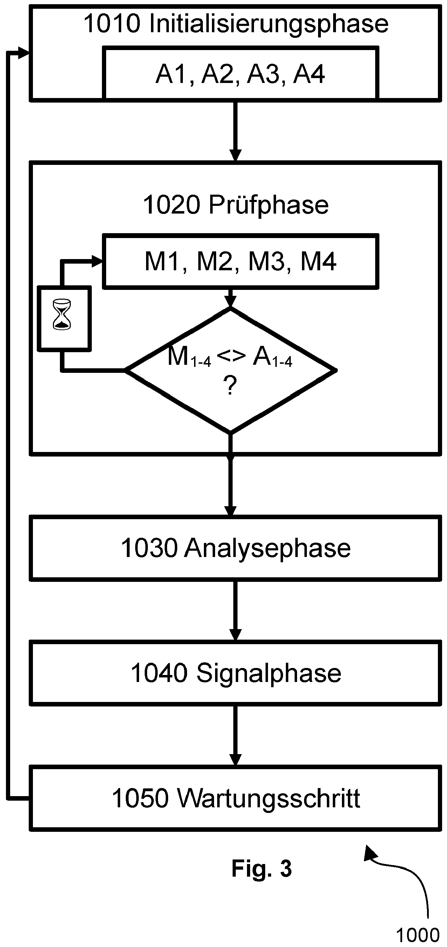

**Fig. 3** zeigt ein Verfahren **1000** zur Überwachung eines Bauelements 10.

Für die nachfolgende Beschreibung des Verfahrens 1000 wird auf die vorangehend eingeführten Bezugszeichen zu den jeweiligen Elementen des Bauelements 10 beziehungsweise des Sensorsystems 24 Bezug genommen.

Beispielhaft wird vorausgesetzt, dass die Durchgangsöffnung 12 des Bauelements 10 anfangs wie in Fig. 1 dargestellt und in der zugehörigen Beschreibung beschrieben mit Füllelementen 14 befüllt ist.

Es wird somit insbesondere erläutert, wie Änderungen an der Durchgangsöffnung 12, Montagefehler oder dergleichen identifiziert und gegebenenfalls behoben werden können.

In einer Initialisierungsphase **1010** werden zunächst Ausgangsmesswerte **A1**, **A2**, **A3**, **A4** jedes der vier Sensoren 22 erfasst. Die Ausgangsmesswerte A1, A2, A3, A4 werden im Speicher 38 abgelegt. Dabei wird sichergestellt, dass sich die Durchgangsöffnung 12 und insbesondere die Füllelemente 14 zum Messzeitpunkt der Ausgangsmesswerte A1, A2, A3, A4 in einem ordnungsgemäßen Zustand befindet.

In einer Prüfphase **1020** werden jeweils nach Ablauf eines festgelegten Intervalls, beispielsweise 60 Sekunden, von jedem der vier Sensoren 22 aktualisierte Messwerte **M1**, **M2**, **M3** und **M4** ausgelesen.

Die ausgelesenen Messwerte M1, M2, M3, M4 werden mit den Ausgangsmesswerten A1, A2, A3, A4 der jeweils zugehörigen Sensoren 22 verglichen. So lange sich aus dem Vergleich kein Unterschied oder zumindest kein relevanter Unterschied zwischen den Ausgangsmesswerten A1, A2, A3, A4 und den zugehörigen Messwerten M1, M2, M3 und M4 ergibt, wird die Prüfphase 1020 zum nächsten Intervallbeginn wiederholt, sodass erneut neue Messungen der Messwerte M1, M2, M3 und M4 erfasst und mit den Ausgangsmesswerten A1, A2, A3, A4 verglichen werden und so fort.

Während der Wartezeiten zwischen zwei Messzeitpunkten kann die Steuerung 30 in einen Ruhezustand versetzt werden, um die Nutzungsdauer pro vollständiger Ladung der Energiequelle 32 zu verlängern.

In diesen Wartezeiten kann ebenfalls das Kommunikationsmodul 42 in einen Ruhezustand, beispielsweise unter Unterbrechung der Funkverbindung zu dem Cloud-basierten Rechnersystem 44 oder unter Reduktion der Sendeleistung, der Datenrate und / oder des versendeten Datenumfangs, versetzt werden.

Wird jedoch ein relevanter Unterschied, beispielsweise ein über einen bestimmten Schwellwert hinausgehender Unterschied, zwischen wenigstens einem der Ausgangsmesswerte A1, A2, A3, A4 und dem zugehörigen Messwert der Messwerte M1, M2, M3 und M4 festgestellt, so wird in einer Analysephase **1030** der festgestellte Unterschied durch den Microcontroller 34 weiter ausgewertet.

Die Analyse kann paarweise für jeweils zwei gegenüberliegende Sensoren 22 erfolgen. Ergibt sich aus den jeweiligen Messwerten der jeweils analysierten Sensoren 22 ein Druckunterschied, so wird dies als Druckkraft in einer der Lage der untersuchten Sensoren 22 entsprechenden Richtung gewertet. Ergeben sich Druckunterschiede für mehrere Paare von gegenüberliegenden Sensoren 22, so kann dies als eine in einer schrägen Richtung wirkenden Druckkraft gewertet werden.

Ein Korrelat der Kraftänderungen kann aus den Stärken der Druckunterschiede abgeleitet werden.

Denkbar ist, dass anstelle oder ergänzend zu absoluten Druckunterschieden auch relative Druckunterschiede in Form der jeweiligen Abweichungen der Messwerte M1, M2, M3 bzw. M4 der untersuchten Sensoren 22 von ihren jeweiligen Ausgangswerten A1, A2, A3, A4 ausgewertet werden. Somit können unterschiedliche Beanspruchungen der Sensoren 22 berücksichtigt werden, sofern diese bei einem ordnungsgemäßem Zustand der Durchgangsöffnung 12 auftreten.

Wird wenigstens so wenigstens eine Druckkraft neu festgestellt, so kann dies durch die Steuerung 30 als Änderung an und / oder in der Durchgangsöffnung 12 gewertet werden.

Wird wenigstens eine solche Änderung detektiert, kann über das Kommunikationsmodul 42 in einer Signalphase **1040** ein Fehlersignal an das Cloud-basierte Rechnersystem 44 abgesetzt werden. Das Fehlersignal kann auch Daten zu weiteren Details der festgestellten Änderung aufweisen.

Das Cloud-basierte Rechner System 44 kann eine Push-Nachricht an das Benutzer-Rechnersystem 46 absetzen. In dieser Pushnachricht können auch die Daten zu den ermittelten Details der festgestellten Änderungen mitübermittelt werden.

Das Benutzerrechnersystem 46 kann den Benutzer über die Änderung benachrichtigen.

In einem Wartungsschritt **1050** kann dann eine Wartung der Durchgangsöffnung 12 veranlasst werden. Beispielsweise kann die Durchgangsöffnung 12 überprüft und gegebenenfalls wieder mit Füllelementen 14 ordnungsgemäß abgedichtet werden.

Bei Bedarf kann anschließend das Sensorsystem 24 neu kalibriert werden und die Überprüfung fortgesetzt werden. Dazu kann das Verfahren 1000 erneut mit der Initialisierungsphase 1010 beginnen.

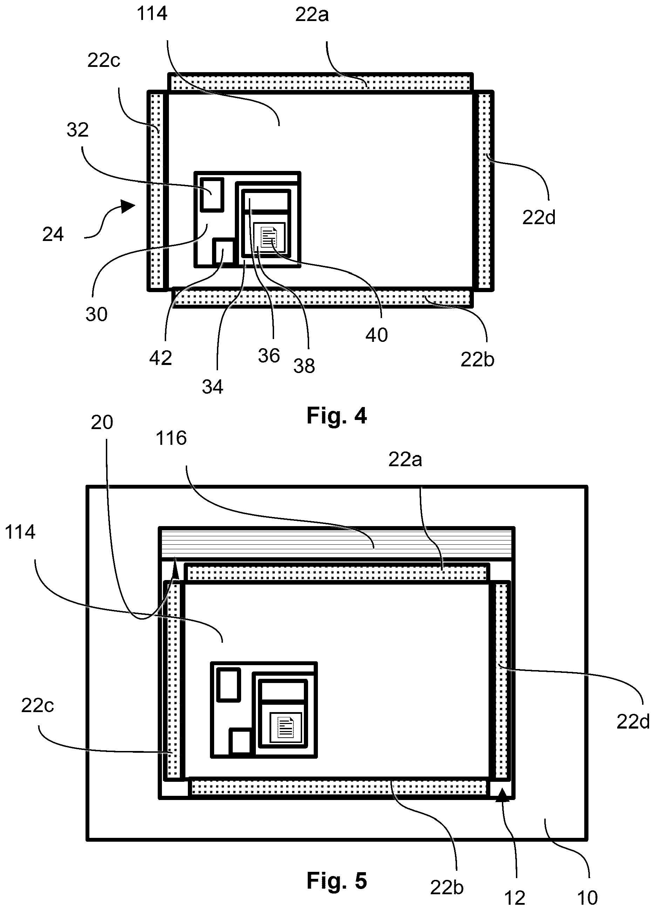

**Fig. 4** zeigt ein Füllelement **114**. Das Füllelement 114 ist ein Brandschutzziegel. Dementsprechend ist es zumindest zu einem Großteil aus einem brandhemmenden Material ausgebildet.

Es weist entlang eines Umfangs angeordnete Sensoren 22a, 22b, 22c und 22d auf. Die Sensoren 22a, 22b, 22c und 22d können in ihren Eigenschaften den vorangehend beschriebenen Sensoren entsprechen. Insbesondere kann es sich wiederum um Drucksensoren handeln.

Im Inneren des Füllelements 114 ist eine Steuerung 30 angeordnet. Die Steuerung 30 kann sich insbesondere vollständig im Inneren des Füllelements 114 befinden. Bei einer alternativen Ausführung kann ein Zugang zu der Steuerung 30, insbesondere aus einer zur Bildebene gemäß Fig. 4 senkrechten Richtung, bestehen, sodass Wartungsarbeiten oder dergleichen an der Steuerung 30 auch bei eingebautem Füllelement 114 einfach möglich bleiben.

Die Steuerung 30 sowie ihre Bestandteile sind analog der im Zusammenhang mit den vorangehend beschriebenen Fig. 1 bis 3 ausgebildeten Steuerung 30 ausgebildet. Insbesondere weist die Steuerung 30 wiederum eine Energiequelle 32, einen Microcontroller 34 mit einem Prozessor 36, einem Speicher 38 und Programmcode 40, sowie ein Kommunikationsmodul 42 auf.

Die Steuerung 30 ist mit den Sensoren 22a, 22b, 22c und 22d elektrisch verbunden, sodass die Sensoren 22a, 22b, 22c und 22d mit Energie versorgbar sind und die Steuerung 30 die Messwerte der Sensoren 22a, 22b, 22c und 22d analog dem vorangehend Beschriebenen verarbeiten kann. Somit ist wiederum ein Sensorsystem 24 ausgebildet.

Das Füllelement 114 ist somit autark nutzbar. Es eignet sich dadurch insbesondere zur Nachrüstung von Bauelementen mit Durchgangsöffnungen.

Wie in **Fig. 5** dargestellt, kann somit das Füllelement 114 in eine Durchgangsöffnung 12 eines Bauelements 10 eingesetzt werden.

Im in Fig. 5 gezeigten Beispiel wird die Durchgangsöffnung 12 durch das Bauelement 10 und einen durch das Bauelement 10 hindurchragenden Kabelkanal **116** gebildet. Somit ist die Durchgangsöffnung 12 durch das Füllelement 116, insbesondere zum Brandschutz, abgedichtet.

Somit bilden das Bauelement 10 und der Kabelkanal 116 wiederum ein Bauelement mit der Durchgangsöffnung 12, wobei ein Sensorsystem zur Überwachung der Durchgangsöffnung 12 eingerichtet ist, wobei das Sensorsystem die vier Sensoren 22a, 22b, 22c und 22d zur Erfassung eines Messwertes der Durchgangsöffnung 12 aufweist, wobei die Sensoren 22a, 22b, 22c und 22d an einem Innenumfang 20 der Durchgangsöffnung 12 angeordnet sind.

Insofern lässt sich durch Einsetzen des Füllelements 114 ein Bauelement mit einer Durchgangsöffnung auf einfache Weise mit einer Überwachungsfunktion, auch nachträglich, ausstatten. Zugleich kann die Durchgangsöffnung mit einem Brandschutz bzw. einer Brandhemmungs-Funktion ausgestattet werden.

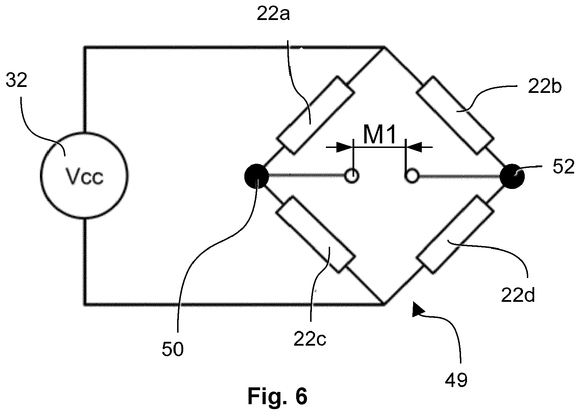

**Fig. 6** zeigt in einer schematischen Darstellung ein Schaltbild mit vier in einer Wheatstone-Brücke **49** verschalteten Sensoren 22a, 22b, 22c und 22d, die von der Energiequelle 32 mit Energie versorgt werden. Diese Art der Verschaltung kann bei den vorangehend beschriebenen Bauteilen 10, dem Sensorsystem 24 bzw. dem Füllelement 114 realisiert sein.

Jeweils zwei der Sensoren 22a, 22b, 22c und 22d sind miteinander in Reihe und parallel zu den beiden übrigen der Sensoren 22a, 22b, 22c und 22d geschaltet. Als Messwert M1 wird die Differenzspannung zwischen zwei Mittelabgriffspunkten **50, 52** gemessen. Die Mittelabgriffspunkte 50, 52 entsprechen dabei jeweils den gemeinsamen Anschlusspunkten der jeweiligen Paare der in Reihe geschalteten Sensoren 22a, 22b, 22c und 22d.

Der Einfluss von Drifteffekten, beispielsweise thermisch bedingten Drifteffekte, auf den Messwert M1 kann somit reduziert werden.

### Bezugszeichenliste

- 10: Bauelement
- 12: Durchgangsöffnung
- 14: Füllelement
- 16, 16: Leitung
- 20: Innenumfang
- 22, 22a, 22b, 22c, 22d: Sensor
- 24: Sensorsystem
- 26: Verbindungsleitung
- 28: Verbindungskabel
- 30: Steuerung
- 32: Energiequelle
- 34: Microcontroller
- 36: Prozessor
- 38: Speicher
- 40: Programmcode
- 42: Kommunikationsmodul
- 44: Cloud-basiertes Rechnersystem
- 46: Benutzer-Rechnersystem
- 48: Anzeige
- 49: Wheatstone-Brücke
- 50,52: Mittelabgriffspunkte
- 1000: Verfahren
- 1010: Initialisierungsphase
- 1020: Prüfphase
- 1030: Analysephase
- 1040: Signalphase
- 1050: Wartungsschritt
- A1, A2, A3, A4: Ausgangsmesswert
- F: Druckkraft
- M1, M2, M3, M4: Messwert

## Patentansprüche

1. **Bauelement (10)**, beispielsweise eine Wand, eine Decke oder ein Boden eines Gebäudes, mit einer Durchgangsöffnung (12),
- umfassend ein Sensorsystem (24) eingerichtet zur Überwachung der Durchgangsöffnung (12),
- wobei das Sensorsystem (24) wenigstens einen Sensor (22, 22a, 22b, 22c, 22d) zur Erfassung eines Messwertes (M1, M2, M3, M4) der Durchgangsöffnung (12) aufweist,
- wobei der Sensor (22, 22a, 22b, 22c, 22d) an einem Innenumfang (20) der Durchgangsöffnung (12) angeordnet ist.

2. Bauelement nach dem vorherigen Anspruch, **dadurch gekennzeichnet, dass** der Sensor (22, 22a, 22b, 22c, 22d) sich auf wenigstens zwei gegenüberliegende Bereiche der Durchgangsöffnung (12) erstreckt.

3. Bauelement nach einem der vorhergehenden Ansprüche, **dadurch gekennzeichnet, dass** die Durchgangsöffnung (12) mit wenigstens einem Füllelement (14) befüllt ist.

4. Bauelement nach einem der vorhergehenden Ansprüche, **dadurch gekennzeichnet, dass** das wenigstens eine Füllelement (14) ein elastisches Material aufweist.

5. Bauelement nach einem der vorhergehenden Ansprüche, **dadurch gekennzeichnet, dass** das Füllelement (14) wenigstens eine Schutzfunktion aufweist, beispielsweise brandhemmend, schallisolierend und / oder fluiddichtend ist.

6. **Sensorsystem (24)** zur Anordnung an einem Bauelement (10) nach einem der vorhergehenden Ansprüche, umfassend
- wenigstens einen an einem Innenumfang (20) der Durchgangsöffnung (12) des Bauelements (10) anordenbaren Sensor (22, 22a, 22b, 22c, 22d),
- wobei der Sensor (22, 22a, 22b, 22c, 22d) eingerichtet ist, einen Messwert (M1, M2, M3, M4) der Durchgangsöffnung (12) zu erfassen.

7. Sensorsystem nach dem vorhergehenden Anspruch, **dadurch gekennzeichnet, dass** der Sensor (22, 22a, 22b, 22c, 22d) ein Druck-, Spannungs-, Dehnungs- und / oder Kraftsensor ist.

8. Sensorsystem nach einem der beiden vorhergehenden Ansprüche, **dadurch gekennzeichnet, dass** der Sensor (22, 22a, 22b, 22c, 22d) eine längliche Form aufweist.

9. Sensorsystem nach einem der Ansprüche 6 bis 8, **dadurch gekennzeichnet, dass** der Sensor (22, 22a, 22b, 22c, 22d) eine Schichtstruktur umfasst, wobei vorzugsweise eine Schicht der Schichtstruktur eine Haftschicht und / oder eine reibungssteigernde Schicht ist.

10. Sensorsystem nach einem der Ansprüche 6 bis 9, **dadurch gekennzeichnet, dass** der Sensor (22, 22a, 22b, 22c, 22d) wenigstens eine Glasfaser aufweist.

11. Sensorsystem nach einem der Ansprüche 6 bis 10, umfassend wenigstens zwei, vorzugsweise wenigstens vier, Sensoren (22, 22a, 22b, 22c, 22d).

12. Sensorsystem nach einem der Ansprüche 6 bis 11, **dadurch gekennzeichnet, dass** mehrere Sensoren (22, 22a, 22b, 22c, 22d), insbesondere wenigstens vier Sensoren, in einer Wheatstone-Brücke (49) angeordnet sind.

13. Sensorsystem nach einem der Ansprüche 6 bis 12, zusätzlich eine Steuerung (30) und / oder eine Energiequelle (32) umfassend.

14. **Füllelement (114),** beispielsweise Brandschutzziegel, mit einem Sensorsystem (24) nach einem der Ansprüche 6 bis 13, wobei wenigstens ein Sensor (22, 22a, 22b, 22c, 22d), vorzugsweise alle Sensoren (22, 22a, 22b, 22c, 22d), des Sensorsystems (24) an einem Umfang des Füllelements (114) angeordnet ist.

15. **Verfahren (1000)** zur Überwachung eines Bauelements (10) nach einem der Ansprüche 1 bis 5, **dadurch gekennzeichnet, dass** ein Messwert (M1, M2, M3, M4) der Durchgangsöffnung (12) des Bauelements (10) durch einen an einem Innenumfang (20) der Durchgangsöffnung (12) befindlichen Sensor (22, 22a, 22b, 22c, 22d) gemessen wird.

16. Verfahren nach dem vorhergehenden Schritt, dass zwei Messwerte (M1, M2, M3, M4) an wenigstens zwei sich gegenüberliegenden Bereichen des Innenumfangs (20) der Durchgangsöffnung (12) gemessen werden.
